# EUROPÄISCHE PATENTANMELDUNG

(11) **EP 2 109 167 A1**
(43) Veröffentlichungstag der Anmeldung: **14.10.2009**
(21) Anmeldenummer: 09004642.6
(22) Anmeldetag: 31.03.2009
(51) Int. Cl.: H01M 2/10, H01M 2/20, H01M 10/40

(54) **Akkumodul für Elektrowerkzeuge**

(30) Priorität: 09.04.2008 DE 102008019525
(71) Anmelder: REMS-WERK Christian Föll und Söhne GmbH, 71332 Waiblingen (DE)
(72) Erfinder: Wagner, Rudolf, 70376 Stuttgart (DE)
(74) Vertreter: Jackisch-Kohl, Anna-Katharina

(57) **Zusammenfassung**

Das Akkumodul hat ein Behältnis (1) zur Aufnahme mindestens eines Akkus (2) und einen vom Behältnis (1) abstehenden, Kontakte aufweisenden Hals (4). Um das Akkumodul so auszubilden, dass es bei kompakter Ausbildung eine hohe Leistung gewährleistet, liegt das Verhältnis des Volumens des Halses (4) zum Volumen des Behältnisses (1) im Bereich zwischen etwa 1:9 und etwa 1:15. Der Hals (4) hat im Vergleich zum Behältnis (1) ein kleines Volumen, wodurch im Hals (4) nur die Kontakte untergebracht werden können, während die Akkus (2) ausschließlich im Behältnis (1) vorgesehen werden können. Das Akkumodul eignet sich für handgeführte Elektrowerkzeuge, wie Rohrbiegegeräte.

## Beschreibung

Die Erfindung betrifft ein Akkumodul für Elektrowerkzeuge nach dem Oberbegriff des Anspruches 1.

Bei akkubetriebenen Elektrowerkzeugen wird das Akkumodul mittels des Halses an das Elektrowerkzeug angesetzt. Die im Hals befindlichen Kontakte wirken mit Gegenkontakten im Elektrowerkzeug zusammen. Sind die im Akkumodul befindlichen Akkus leer, wird das Akkumodul vom Elektrowerkzeug abgenommen und in ein Ladegerät eingesetzt. Das Behältnis des Akkumoduls ist verhältnismäßig klein, so dass die Leistung der im Behältnis untergebrachten Akkus begrenzt ist. Darum ist auch der Hals im Verhältnis zum Behältnis so großvolumig ausgebildet, dass in ihm weitere Akkus untergebracht werden können. Dadurch wird aber die Handhabung des Elektrowerkzeuges, an das das Akkumodul angeschlossen ist, erschwert.

Der Erfindung liegt die Aufgabe zugrunde, das gattungsgemäße Akkumodul so auszubilden, dass es bei kompakter Ausbildung eine hohe Leistung gewährleistet.

Diese Aufgabe wird beim gattungsgemäßen Akkumodul erfindungsgemäß mit den kennzeichnenden Merkmalen des Anspruches 1 gelöst.

Aufgrund der erfindungsgemäßen Ausbildung kann das Akkumodul einerseits kompakt ausgebildet sein, andererseits eine hohe Leistung liefern. Der Hals hat im Vergleich zum Behältnis nur noch ein kleines Volumen. Dadurch ist es möglich, im Hals nur noch die Kontakte unterzubringen, während die Akkus ausschließlich im Behältnis gelagert werden können. Die Ausbildung des Halses richtet sich nur noch danach, dass in ihm die Kontakte optimal untergebracht werden können. Diese Kontakte stellen die Verbindung von den Akkus zum Elektrowerkzeug her. Das Behältnis demgegenüber muss nur im Hinblick auf eine kompakte Ausbildung so gestaltet werden, dass in ihm eine möglichst große Zahl von Akkus untergebracht werden können.

Beim erfindungsgemäßen Akkumodul gemäß Anspruch 4 ist der die Kontakte aufweisende Hals kürzer als das Behältnis. Dadurch ist es möglich, unter Beibehaltung der Gesamthöhe des Akkumoduls den Aufnahmeraum des Behältnisses so groß zu gestalten, dass leistungsstarke Akkus im Behältnis untergebracht werden können. Die kompakte Bauform wirkt sich vorteilhaft beim Arbeiten mit dem Elektrowerkzeug aus, an das das Akkumodul angeschlossen ist. Eine gute kompakte Ausbildung bei möglichst großem Aufnahmeraum des Behältnisses für den Akku ergibt sich, wenn das Verhältnis der Höhe des Behältnisses zur Höhe des Halses im Bereich zwischen etwa 1,1:1 und etwa 1,5:1 liegt.

Eine besonders vorteilhafte Ausbildung ergibt sich, wenn das Verhältnis der Gesamthöhe des Akkumoduls zur Höhe des Halses im Bereich zwischen etwa 2:1 und etwa 2,5:1 liegt. In Verbindung mit dem Höhenverhältnis von Hals und Behältnis ergibt sich somit unter Berücksichtigung der Gesamthöhe des Akkumoduls, dass der Hals einerseits ausreichend lang ist, um den Kontakt zum Elektrowerkzeug bzw. zum Ladegerät zu gewährleisten und andererseits der Aufnahmeraum des Behältnisses ausreichend groß ist, um auch leistungsstarke Akkus im Behältnis unterbringen zu können.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: in Explosivdarstellung ein erfindungsgemäßes Akkumodul,
- Fig. 2: das erfindungsgemäße Akkumodul in Seitenansicht,
- Fig. 3: eine Draufsicht auf das erfindungsgemäße Akkumodul,
- Fig. 4: einen Schnitt durch das erfindungsgemäße Akkumodul.

Das Akkumodul wird für handgeführte Elektrowerkzeuge eingesetzt, wie Rohrbiegegeräte, Axial- oder Radialpressgeräte, Gewindeschneidgeräte, Trenngeräte und dergleichen. Das Akkumodul hat ein Behältnis 1, in dem Akkus 2 untergebracht werden. Das Behältnis 1 wird mit einem Deckel 3 geschlossen, der lösbar, aber auch unlösbar mit dem Behältnis 1 verbunden sein kann.

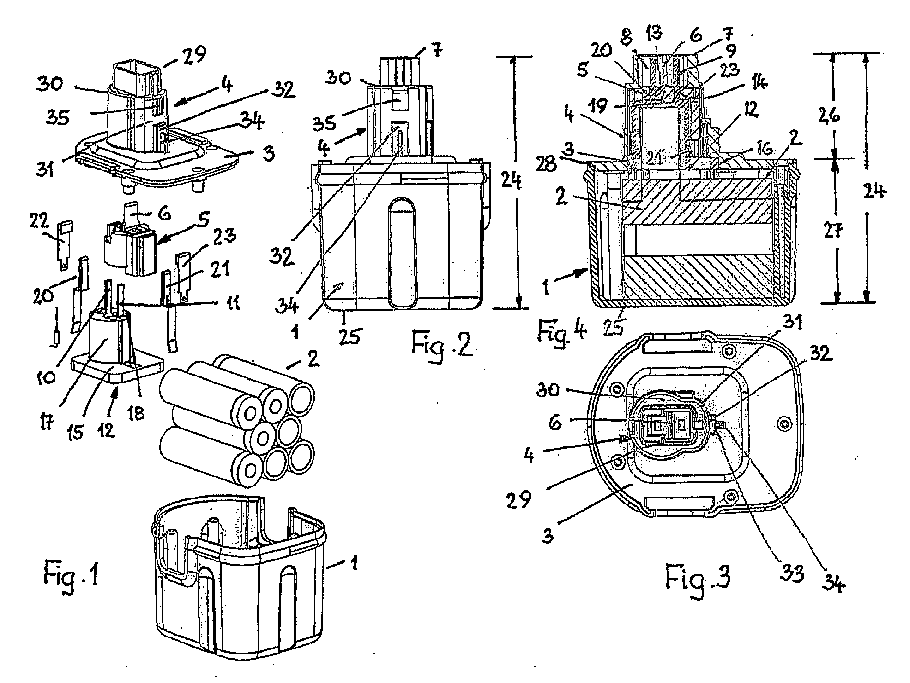

Vom Deckel 3 steht ein Hals 4 ab, der kleineren Umriss hat als der Deckel 3. Im dargestellten Ausführungsbeispiel ist der Hals 4 außermittig am Deckel 3 vorgesehen. Er kann selbstverständlich auch mittig vom Deckel 3 abstehen. Der Hals 4 ist als Hohlkörper ausgebildet, in den von der Deckelseite aus ein Isolierkörper 5 eingesetzt wird. Er hat einen Trennsteg 6, der sich bis in Höhe des freien Endes 7 des Halses 4 erstreckt (Fig. 4) und den Hals 4 am freien Ende in zwei Kammern 8 und 9 unterteilt. In sie ragen zwei Zungen 10, 11 eines Kontaktträgers 12, der von der Deckelseite aus in den Isolierkörper 5 eingesetzt wird. Er hat Durchtrittsöffnungen 13, 14 für die Zungen 10, 11.

Der Kontaktträger 12 hat eine Grundplatte 15, die formschlüssig in einer Vertiefung 16 in der dem Behältnis 1 zugewandten Unterseite des Deckels 3 liegt. Von der Grundplatte 15 steht ein Ansatz 17 ab, der als Hohlkörper ausgebildet ist und in den Isolierkörper 5 ragt. Die Zungen 10, 11 stehen von einer Deckelseite 18 ab, mit der der Kontaktträger 12 an der Unterseite einer Deckelseite 19 des Isolierkörpers 5 anliegt.

Auf die Zungen 10, 11 wird jeweils ein Kontakt 20, 21 gesteckt (Fig. 1), von denen der Kontakt 20 durch die Deckelseite 18 des Kontaktkörpers 12 nach innen ragt. Der andere Kontakt 21 erstreckt sich zwischen der Wandung des Ansatzes 17 und der Innenwand des Isolierkörpers 5.

Weitere Kontakte 22, 23 werden in den Isolierkörper 5 eingesetzt.

Die Kontakte 20 bis 23 sind in bekannter Weise mit den Akkus 2 elektrisch verbunden. Wie sich aus Fig. 4 ergibt, sind die Kontakte 20, 21 nach innen in das Behältnis 1 verlängert und mit den Akkus 2 verbunden. Diese Verlängerungen sind in Fig. 1 nicht dargestellt.

Das Akkumodul hat eine Höhe 24, gemessen von der Unterseite des Bodens 25 des Behältnisses 1 und dem freien Ende 7 des Halses 4. Der Hals 4 selbst hat eine Höhe 26, die kleiner als die Höhe 27 des Behältnisses 1 ist. Die Höhe 26 des Halses 4 ist zwischen der Oberseite des Deckels 3 und dem freien Ende 7 des Halses 4 gemessen. Die Höhe des Behältnisses 1 ist zwischen der Unterseite des Bodens 25 und dem freien Rand 28 der Behältniswand gemessen. Die Oberseite des Deckels 3 liegt zumindest im Randbereich in einer Ebene mit dem freien Rand 28 der Wandung des Behältnisses 1. Vorteilhaft ist die Höhe 26 des Halses 4 kleiner als die halbe Höhe des Akkumoduls.

Das Verhältnis 27 zu 26 liegt in einem Bereich zwischen etwa 1,1:1 bis etwa 1,5:1, vorzugsweise zwischen etwa 1,2:1 bis etwa 1,4:1, insbesondere zwischen etwa 1,3:1 und 1,38:1. Durch dieses Höhenverhältnis von Hals 4 und Behältnis 1 wird erreicht, dass der Hals 4 kurz sein kann, während das Behältnis 1 eine große Höhe und damit auch ein großes Volumen aufweisen kann, um eine entsprechende Zahl von Akkus 2 aufnehmen zu können. Dadurch hat das Akkumodul eine sehr kompakte Bauform, ohne dass Abstriche an der Leistung des Akkumoduls zu machen sind. Die kompakte Bauform, die durch das beschriebene Höhenverhältnis von Hals 4 und Behältnis 1 erreicht wird, trägt ferner dazu bei, dass auch das mit dem Akkumodul ausgerüstete Elektrowerkzeug kompakte Abmessungen hat. Es ist dadurch einfach in der Handhabung beim Arbeiten mit dem Elektrowerkzeug.

Das Verhältnis zwischen der Gesamthöhe 24 des Akkumoduls zur Höhe 26 des Halses 4 liegt im Bereich zwischen etwa 2:1 und etwa 2,5:1. In Verbindung mit dem oben angegebenen Höhenverhältnis zwischen der Höhe 27 des Behältnisses 1 und der Höhe 26 des Halses 4 ergibt sich ein Akkumodul, das bei einer vorgegebenen Gesamthöhe 24 ein großes Behältnis 1 aufweist. Besonders vorteilhafte Abmessungen bzw. Abmessungsverhältnisse ergeben sich, wenn das Verhältnis der Gesamthöhe 24 des Akkumoduls zur Höhe 26 des Halses 4 im Bereich zwischen etwa 2,2:1 und etwa 2,4:1 liegt. Dann hat der Hals 4 einerseits eine solche Länge, dass er zuverlässig sicher mit dem Elektrowerkzeug bzw. dem Ladegerät verbunden werden kann, dass andererseits das Akkumodul unter Berücksichtigung seiner Gesamthöhe 24 ein so großes Behältnis 1 aufweist, dass darin auch leistungsstarke und entsprechend große Akkus untergebracht werden können.

Das Akkumodul ist so ausgebildet, dass die Akkus 2 ausschließlich im Behältnis 1 untergebracht sind. Der Hals 4 dient lediglich zur Aufnahme der beschriebenen Kontakte, die so ausgebildet sind, dass sie mit den im Behältnis 1 untergebrachten Akkus 1 in Kontakt kommen. Das Verhältnis des Volumens des Halses 4 zum Volumen des Behältnisses 1 liegt im Bereich zwischen etwa 1:9 und etwa 1:15. Dadurch wird erreicht, dass das Akkumodul kompakt ausgebildet ist und dennoch ausschließlich im Behältnis 1 die Akkus 2 untergebracht werden können. Aufgrund dieses Volumenverhältnisses hat der Hals 4 im Vergleich zum Behältnis 1 nur eine geringe Höhe 26. Da im Hals 4 kein Akku unterzubringen ist, kann sein Innenraum optimal an die Unterbringung der Kontakte angepasst werden, während umgekehrt der Innenraum des Behältnisses 1 im Hinblick auf die Aufnahme der Akkus 2 optimal gestaltet werden kann. Besonders günstige Verhältnisse ergeben sich, wenn das Verhältnis der Volumina von Hals 4 zum Behältnis 1 im Bereich zwischen etwa 1:10 und etwa 1:14 liegt. Besonders vorteilhaft liegt dieses Verhältnis zwischen etwa 1:11 und etwa 1:13. Der Hals 4 kann ausreichend groß gestaltet werden, um das Akkumodul an das entsprechende Elektrowerkzeug zuverlässig anschließen zu können. Das Behältnis 4 ist einerseits ausreichend groß, um eine entsprechende Zahl von Akkus 2 aufzunehmen, andererseits aber so gestaltet, dass es in montierter Lage das Arbeiten mit dem jeweiligen Elektrowerkzeug nicht beeinträchtigt.

In Verbindung mit den angegebenen Höhenverhältnissen des Halses 4 und des Behältnisses 1 ergibt sich darüber hinaus eine besonders vorteilhafte kompakte Gestaltung des Akkumoduls bei gleichzeitig hoher Leistungsabgabe über einen langen Zeitraum hinweg. Mit dem Akkumodul kann darum sehr lang gearbeitet werden, wobei es aufgrund der beschriebenen Ausbildung so geformt werden kann, dass es optimal mit dem Elektrowerkzeug zusammenwirkt.

Das Behältnis 1 kann abweichend von der dargestellten Ausführungsform auch jede andere geeignete Formgebung haben. Lediglich die Höhe bzw. das Volumen des Behältnisses 1 in Bezug auf die Höhe bzw. das Volumen des Halses 4 liegen in dem angegebenen Bereich.

Der Hals 4 hat, in Draufsicht gemäß Fig. 3 gesehen, im Umriss Schlüssellochform. Dadurch ist sichergestellt, dass das Akkumodul nur in einer bestimmten Lage an das Elektrowerkzeug angeschlossen bzw. in ein Ladegerät eingesetzt werden kann. Diese schlüssellochförmige Umrissgestaltung des Halses 4 ist nicht über die gesamte Höhe vorgesehen. Am oberen freien Ende hat der Hals einen rechteckigen Umriss aufweisenden Endkörper 29, in den der Trennsteg 6 des Isolierkörpers 5 ragt. Die Zungen 10, 11 des Kontaktträgers 12 ragen ebenfalls in diesen Endkörper 29.

Der Endkörper 29 ist so gestaltet, dass er innerhalb des schlüssellochförmigen Umrisses des übrigen Teils des Halses 4 liegt (Fig. 3). Dadurch wird am Übergang vom Endkörper 29 zum übrigen Teil des Halses 4 eine Stirnfläche 30 gebildet, die den Hals 4 nach oben abschließt und an dessen Innenseite der Isolierkörper 5 mit seiner Deckelseite 19 anliegt. Dadurch ist ein einfacher Zusammenbau des Akkumoduls gewährleistet, da durch das Anlegen des Deckelteils 19 des Isolierkörpers 5 an der Innenseite der Stirnfläche 30 des Halses 4 die Einbaulage des Isolierkörpers 5 definiert ist.

An der schmaleren, abgerundeten Seite 31 des Halses 4 befindet sich ein vorstehendes Formschlusselement 32, das sich bis zur Oberseite des Deckels 3 erstreckt, vorzugsweise einstückig mit ihm und der Seite 31 des Halses 4 ausgebildet ist. Das Formschlusselement 32 hat vorteilhaft rechteckigen Umriss und ist so angeordnet, dass seine Längsseiten sich in Höhenrichtung des Halses 4 erstrecken. Das Formschlusselement 32 ist mittig an der gekrümmten Seite 31 vorgesehen. Von der Stirnseite 33 (Fig. 3) des Formschlusselementes 32 steht mittig ein Steg 34 ab, der vorteilhaft einstückig mit dem Formschlusselement 32 ausgebildet ist und sich bis zur Oberseite des Deckels 3 erstreckt. Der Steg 34 schließt mit seiner einen Schmalseite an die Stirnseite 33 des Formschlusselementes 32 an. Der Steg 34 ist vorteilhaft kürzer als das Formschlusselement 32, das vorzugsweise um ein Mehrfaches breiter ist als der Steg 34.

Das Formschlusselement 32 und der Steg 34 tragen dazu bei, dass das Akkumodul verwechslungsfrei an das Elektrowerkzeug angeschlossen bzw. in das Ladegerät eingesetzt werden kann.

Mit Abstand oberhalb des Formschlusselementes 32 ist die gekrümmte Außenseite 31 des Halses 4 mit einer rechteckigen Vertiefung 35 versehen, die sich bis zur Stirnfläche 30 erstreckt. Auch diese Vertiefung 35 trägt zu einem sicheren Anschluss des Akkumoduls an das Elektrowerkzeug und an das Ladegerät bei.

## Patentansprüche

1. Akkumodul für Elektrowerkzeuge, mit einem Behältnis zur Aufnahme von wenigstens einem Akku und einem vom Behältnis abstehenden, Kontakte aufweisenden Hals,
**dadurch gekennzeichnet, dass** das Verhältnis des Volumens des Halses (4) zum Volumen des Behältnisses (1) im Bereich zwischen etwa 1:9 und etwa 1:15 liegt.

2. Akkumodul nach Anspruch 1,
**dadurch gekennzeichnet, dass** das Verhältnis des Volumens des Halses (4) zum Volumen des Behältnisses (1) im Bereich zwischen etwa 1:10 und etwa 1:14 liegt.

3. Akkumodul nach Anspruch 1 oder 2,
**dadurch gekennzeichnet, dass** das Verhältnis des Volumens des Halses (4) zum Volumen des Behältnisses (1) im Bereich zwischen etwa 1:11 und etwa 1:13 liegt.

4. Akkumodul für Elektrowerkzeuge, mit einem Behältnis zur Aufnahme von wenigstens einem Akku und einem vom Behältnis abstehenden, Kontakte aufweisenden Hals,
**dadurch gekennzeichnet, dass** die Höhe (26) des Halses (4) geringer ist als die in gleicher Richtung gemessene Höhe (27) des Behältnisses (1).

5. Akkumodul nach Anspruch 4,
**dadurch gekennzeichnet, dass** das Verhältnis der Höhe (27) des Behältnisses (1) zur Höhe (26) des Halses (4) im Bereich zwischen etwa 1,1:1 und etwa 1,5:1 liegt.

6. Akkumodul nach Anspruch 4 oder 5,
**dadurch gekennzeichnet, dass** das Verhältnis der Höhe (27) des Behältnisses (1) zur Höhe (26) des Halses (4) im Bereich zwischen etwa 1,2:1 bis etwa 1,4:1 liegt.

7. Akkumodul nach einem der Ansprüche 4 bis 6,
**dadurch gekennzeichnet, dass** das Verhältnis der Höhe (27) des Behältnisses (1) zur Höhe (26) des Halses (4) im Bereich zwischen etwa 1,3:1 und etwa 1,38:1 liegt.

8. Akkumodul nach einem der Ansprüche 1 bis 7,
**dadurch gekennzeichnet, dass** der Hals (4) über seine Höhe (26) unrunden Querschnitt hat.

9. Akkumodul nach einem der Ansprüche 1 bis 8,
**dadurch gekennzeichnet, dass** der an einen Deckel (3) für das Behältnis (1) anschließende Teil des Halses (4) schlüssellochförmigen Umriss hat.

10. Akkumodul nach einem der Ansprüche 1 bis 9,
**dadurch gekennzeichnet, dass** der endseitige Teil (29) des Halses (4) rechteckigen Umriss hat.

11. Akkumodul nach Anspruch 10,
**dadurch gekennzeichnet, dass** der endseitige Halterteil (29) vom schlüssellochförmigen Teil des Halses (4) überragt wird, in Längsrichtung des Halses (4) gesehen.

12. Akkumodul nach einem der Ansprüche 9 bis 11,
**dadurch gekennzeichnet, dass** an der Außenseite (31) des schlüssellochförmigen Halterteiles wenigstens ein vorteilhaft über die Außenseite (31) vorstehendes Formschlusselement (32, 34, 35) vorgesehen ist.

13. Akkumodul nach Anspruch 12,
**dadurch gekennzeichnet, dass** das Formschlusselement (35) eine Vertiefung in der Außenseite (31) ist.

14. Akkumodul nach einem der Ansprüche 1 bis 13,
**dadurch gekennzeichnet, dass** das Verhältnis der Gesamthöhe (24) des Akkumoduls zur Höhe (26) des Halses (4) im Bereich zwischen etwa 2:1 und etwa 2,5:1 liegt.

15. Akkumodul nach Anspruch 14,
**dadurch gekennzeichnet, dass** das Verhältnis der Gesamthöhe (24) des Akkumoduls zur Höhe (26) des Halses (4) im Bereich zwischen etwa 2,2:1 und etwa 2,4:1 liegt.
